# EUROPEAN PATENT SPECIFICATION

(11) **EP 2 207 320 B1**
(45) Date of publication and mention of the grant of the patent: **25.05.2011**
(21) Application number: 09150481.1
(22) Date of filing: 13.01.2009
(51) Int. Cl.: H04L 27/34

(54) **A transmitting method and a receiving method of a modulated data stream**
Sendeverfahren und Empfangsverfahren für einen modulierten Datenstrom
Procédé de transmission et procédé de réception d'un flux de données modulé

(43) Date of publication of application: 14.07.2010
(73) Proprietor: Alcatel Lucent, 75008 Paris (FR); Ecole Superieure d'electricite, 91192 Gif Sur Yvette Cedex (FR); CENTRE NATIONAL DE LA RECHERCHE SCIENTIFIQUE (CNRS), 75794 Paris Cedex 16 (FR)
(72) Inventor: Duhamel, Pierre, 91192, Gif Sur Yvette Cedex (FR); Sadough, Seyed Mohammad Sajad, 91192, Gif Sur Yvette Cedex (FR); Alberi Morel, Marie Line, 75008, Paris (FR); Sayadi, Bessem, 75008, Paris (FR)
(74) Representative: Nicolle, Olivier

(56) References cited:
- EP-A- 0 912 008
- PAPKE L ET AL: "COMBINED MULTILEVEL TURBO-CODE WITH MR-MODULATION" COMMUNICATIONS - GATEWAY TO GLOBALIZATION. PROCEEDINGS OF THE INTERNATIONAL CONFERENCE ON COMMUNICATIONS. SEATTLE, JUNE 18 - 22, 1995; [PROCEEDINGS OF THE INTERNATIONAL CONFERENCE ON COMMUNICATIONS (ICC)], NEW YORK, IEEE, US, vol. 2, 18 June 1995 (1995-06-18), pages 668-672, XP000533098 ISBN: 978-0-7803-2487-9
- FAZEL K ET AL: "A CONCEPT OF DIGITAL TERRESTRIAL TELEVISION BROADCASTING" WIRELESS PERSONAL COMMUNICATIONS, SPRINGER, DORDRECHT, NL, vol. 2, no. 1/02, 1 January 1995 (1995-01-01), pages 9-27, XP000589609 ISSN: 0929-6212

## Description

### FIELD OF THE INVENTION

The present invention relates to a transmitting method of a modulated data stream for use in a radio communication system. The invention also relates to a receiving method of a modulated data stream for use in a radio communication system, to a transmitting apparatus and to a receiving apparatus.

Such a transmitting method may be used in any radio communication system using a modulated data stream, for example, to transmit different broadcast services.

### BACKGROUND OF THE INVENTION

A transmitting method of a modulated data stream for use in a radio communication system, well-known by the man skilled in the art, uses hierarchical modulation in order to transmit two independent broadcast services on a single frequency channel, leading to different receiving qualities. These two independent broadcast services are transported respectively over two digital data streams referred as high-priority stream (or HP stream) and low-priority stream (or LP stream).

The well-known solution for hierarchical modulation consists in encoding the two independent data streams independently with two separated encoders, and interleaving the bits of the two independent coded streams to form a single M-ary modulation symbol. For example, in a 16-QAM constellation used within a hierarchical modulation, a modulation symbol coded on 4 bits is formed of 2 bits of the HP stream (the MSB of a symbol designating a quadrant of the constellation) and 2 bits of LP stream (the LSB of a symbol designing position within a quadrant of the constellation). Therefore the hierarchical modulation enables to deliver an HP stream with a stronger robustness than an LP stream one, since the Euclidian distance between quadrants is greater than the distance between positions within a quadrant. More precisely, the HP stream is much less sensitive to noise than the LP stream.

The document by Papke et al entitled "Combined Multilevel Turbo- Code with MR-Modulation", IEEE, vol. 2. 18.6.1995, pages 668-672, XP000533098, ISBN: 978-0-7803-2487-9 describes such prior art. Another prior art on the same subject are the document entitled "A Consept of Digital Terrestrial Television Broadcasting" by Fazel et al, Springer, vol. 2, n ° 1/02, 1.1.1995, pages 9-27, XP000589609, ISSN: 0929-6212 and the patent application EP-A-0 912 008.

Hence, one major problem of this known prior art is that the enhanced protection against noise offered by hierarchical modulation for the HP stream is at the price of lower noise immunity for the LP stream. More precisely, the decoding of LP stream may require a considerable higher signal to noise ratio (SNR) in order to provide the same quality of service (e.g., bit error rate - BER) as that of the HP stream. Users in degraded reception condition (those with lower SNR) will be able to receive only the HP streams whereas users in good reception condition (high SNR) will be able to receive both HP streams and LP streams.

### SUMMARY OF THE INVENTION

Accordingly, it is an object of the invention to provide a transmitting method of a modulated data stream for use in a radio communication system, which improves the BER performance of a second data stream LP and thus which improves the receiving performance of such a data stream.

To this end, there is provided a transmitting method according to claim 1, a receiving method according to claim 6, a transmitting apparatus according to claim 11 and a receiving apparatus according to claim 12. There is also provided a mobile station according to claims 13 and 14, a base station according to claims 15 and 16 and a radio communication system according to claim 17. Further preferred embodiments are set forth in the dependent claims.

### BRIEF DESCRIPTION OF THE DRAWINGS

Additional objects, features and advantages of the invention will become apparent upon reading the following detailed description and upon reference to the accompanying drawings in which:
- Fig. 1 illustrates a first diagram showing a transmitting method in a not limited embodiment according to the invention;
- Fig. 2 illustrates a second diagram showing a receiving method in a not limited embodiment according to the invention;
- Fig. 3 illustrates a transmitting apparatus for carrying out the transmitting method of Fig. 1;
- Fig. 4 illustrates a receiving apparatus which for carrying out the receiving method of Fig. 2;
- Fig. 5 illustrates a schematic diagram of a first constellation to explain hierarchical modulation, a hierarchical modulation being used within the transmitting method of Fig. 1;
- Fig. 6 illustrates a schematic diagram of a second constellation to explain hierarchical modulation, a hierarchical modulation being used within the transmitting method of Fig. 1;
- Fig. 7 is a graph showing performance results of the receiving method of Fig. 2 compared to other methods, and according to a modulation parameter;
- Fig. 8 is a graph showing rapidity results of the receiving method of Fig. 2 compared to another method, and according to a signal to noise ratio parameter; and
- Fig. 9 is a communication system model comprising a transmitting apparatus of Fig. 3 and a receiving apparatus of Fig. 4.

### DETAILED DESCRIPTION OF THE INVENTION

In the following description, well-known functions or constructions by the man skilled in the art are not described in detail since they would obscure the invention in unnecessary detail.

It is to be noted that for the following description, any reference to a data stream means a digital data stream.

In the following description, in a not limited embodiment, a hierarchical modulation is described.

The present invention relates to a transmitting method of a modulated data stream MOD for use in a radio communication system, and to a receiving method of a modulated data stream MOD for use in a radio communication system.

As will be described in further detail below, at the transmitting side, one proposes to mix at least some part of the first data stream HP and a second data stream LP in order to make the encoding of said second data stream LP dependent on the first data stream HP, even if the initial uncoded data streams remain independent. The dependency induced by the mixer/encoding will be well exploited in the receiving side especially in the decoding of the second data stream LP that uses some bits of the first data stream HP which are more reliable which play the role of 'soft pilot' information which are probabilistic information.

Thanks to hierarchical modulation in the not limited embodiment described in the following description, the HP stream is more robust to noise. In other words the probabilistic information on the first data stream HP is more reliable than the probabilistic information on the second data stream LP. This feature is exploited at the LP decoding side since the decoding operation of second data stream bits LP requires the probabilities on first data stream bits HP due to the mixing operation performed at the transmitting side.

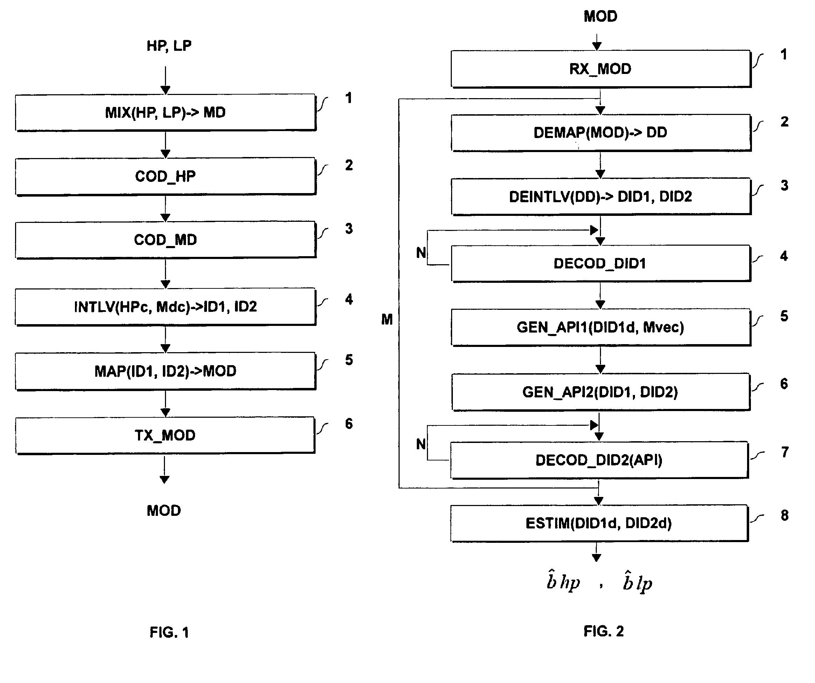

The transmitting method comprises the following steps as illustrated in Fig. 1:
- Generating a mixed data stream MD on the basis of mixing at least one part of a first data stream HP with a second data stream LP (step MIX(HP, LP));
- Coding said first data stream HP (step COD_HP);
- Coding said mixed data stream MD (step COD_MD);
- Generating two interleaved data streams ID1, ID2 based on the first coded data stream HPc and the mixed coded data stream MDc (step INTLV(HPc, MDc));
- Generating a modulated data stream MOD on the basis of mapping said interleaved data streams ID1, ID2 (step MAP(ID1, ID2)) ; and
- Transmitting said modulated data stream MOD over a channel CH (step TX_MOD).

In a not limited embodiment, the first data stream HP is a high-priority data stream, and the second data stream LP is a low-priority data stream. As will be described below, the high priority stream HP will improve the BER performance of the low-priority data stream LP. Hence, the reception of the LP stream will be improved.

In the not limited example of a radio communication system, the high-priority data stream HP will be used to transmit first broadcast services which will be received by all the users, either by the ones with a degraded reception condition, and either by the ones with a good reception condition. The low priority data stream LP will be used to transmit second broadcast services which will be received by the users who have good reception conditions only.

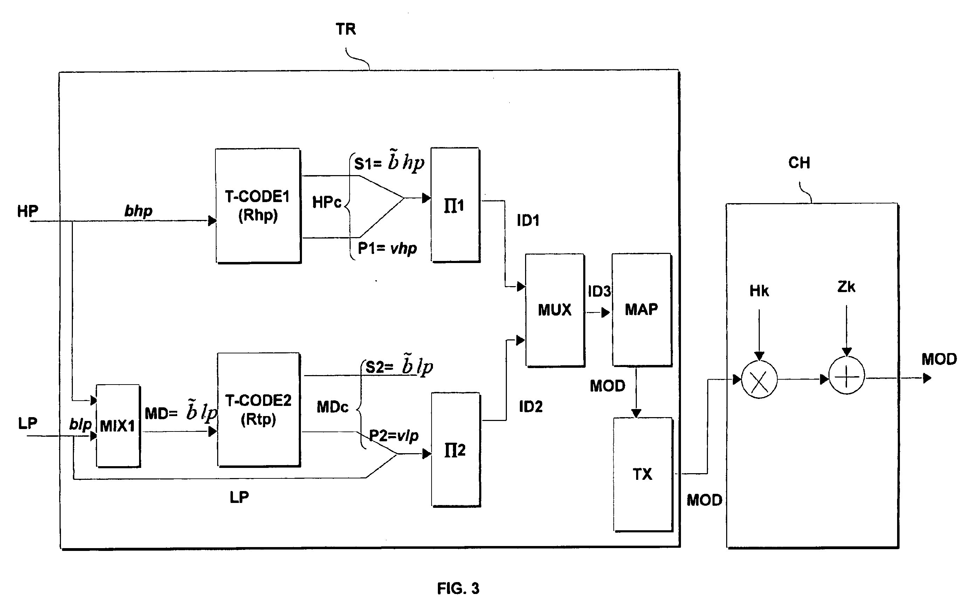

The steps of the transmitting method are described in detail below. Reference to Fig. 1 and Fig. 3 will be made.

In a first step 1), one generates a mixed data stream MD on the basis of mixing at least one part of a first data stream HP with a second data stream LP.

In a not limited embodiment, the whole first data stream HP is used in the mixing step as illustrated in Fig. 3. As will be seen below, at the receiving side, it permits to perform a better decoding of the second data stream LP (the BER performance is improved), but a slower decoding.

As we will see further in detail below, this step is performed in order to make the encoding of the second data stream LP dependent on the first data stream HP. The dependency induced by the encoding will be exploited in the receiving method where an a priori information API, which is reliable, based on the first data stream HP will be used to decode the second data stream LP.

### In a second step 2), one encodes said first data stream HP.

In a not limited embodiment, the encoding is performed according to a turbo-code well-known by the man skilled in the art (as described in the reference "Near Shannon Limited error - correcting Coding and Decoding : Turbo-codes" published by C.Berrou, A.Glavieux and P.Thitimajshima - IEEE 1993 - 0-7803-0950-2/93).

Such a turbo-code is based on recursive systematic convolutional codes, well-known by the man skilled in the art, and permits to improve the Bit Error Rate (BER) of the encoding/decoding. A recursive systematic convolutional code permits to make some linear combinations of a plurality of input bits of the first data stream HP. The number of output bits, which are the linear combinations, is greater than the number of input bits. The number of output bits is function of the redundancy of the code. Hence, a code rate R is associated to a turbo-code and corresponds to the quantity of redundancy introduces.

The output of the encoding operation is a coded first data stream HPc which is composed of a systematic part S1 and of a parity part P1 as illustrated in Fig. 3.

### In a third step 3), one encodes said mixed data stream MD.

In a not limited embodiment, the encoding is performed according to a turbo-code as above described.

The output of the encoding is a mixed coded data stream MDc which is composed of a systematic part S2 and of a parity part P2, said systematic part S2 comprising the first data stream systematic part S1.

It is to be noted that when the whole first data stream HP is used in the mixing step, the systematic part S2 will comprise the whole first data stream HP. When only a part of the first data stream HP is used within the mixing step, the systematic part S2 will comprise this part only.

**In a fourth step 4**), one generates two interleaved data streams ID1, ID2 based on the first coded data stream HPc and on the mixed coded data stream MDc.

Since the systematic part S1 of the first data stream HP will be transmitted inside the first coded data stream HPc, transmission of said systematic part S1 through the mixed coded data stream MDc will lead to a loss of spectral efficiency because some unused bits will be transmitted (the systematic part S1 will be transmitted twice).

Therefore, in a not limited embodiment, the step of interleaving data streams comprises a first sub-step of removing the systematic part S2 (comprising the systematic part above mentioned S1) from the mixed coded data stream MDc. Therefore, the systematic part S1 of the first data stream HP is discarded from the mixed coded data stream MDc.

Hence, to achieve this, in a not limited embodiment, the second interleaved data stream ID2 is based on the interleaving of the parity part P2 of the mixed coded data stream MDc and of the second data stream LP.
It permits to avoid a demixing operation at the receiving side (as the mixed coded data stream MDc comprises also the bits of the second data stream LP).

It is to be noted that in a not limited embodiment, the first interleaved data stream ID1 is based on the interleaving of the systematic part S1 and the parity part P1 of the first coded data stream HPc itself.

Using two interleaved data streams ID1 and ID2 permits to obtain a maximum diversity (two neighboring bits of either the first or second data streams will see different channel samples Hk and noise samples Zk).

It is to be noted that interleaving is a technique well-known by the man skilled in the art to overcome correlated channel noise such as burst error or fading. An interleaver rearranges input data such that consecutive data are split among different blocks. Hence, the channel noise is spread over the different blocks. At the receiver end, the interleaved data is arranged back into the original data stream by a deinterleaver as will be described later. As a result of interleaving, correlated noise introduced in the transmission channel appears to be statistically independent at the receiver and thus permits better error correction.

**In a fifth step 5**), one generates a modulated data stream MOD on the basis of mapping said interleaved data streams ID1, ID2.

As illustrated in Fig. 3, in order to apply a mapping to the two interleaved data streams ID1, and ID2, the transmitting method comprises a further step of multiplexing the two interleaved data streams ID1 and ID2 in a single interleaved data stream ID3.

In a not limited embodiment, the mapping is hierarchical. It permits to improve the robustness of the first data stream HP.

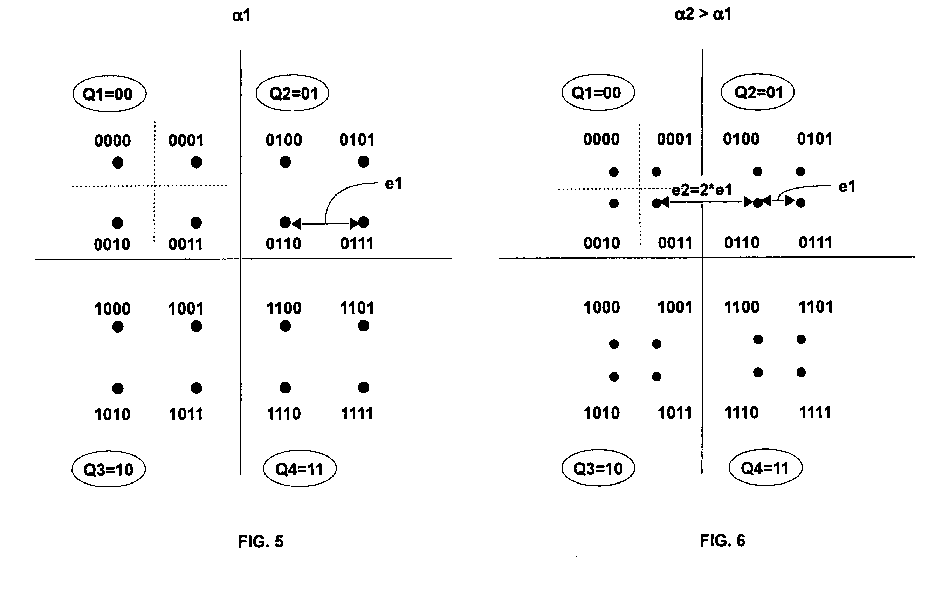

In not limited variant of said embodiment, the hierarchical mapping used a QPSK ("Quadrature Phase Shift Keying"), a 16-QAM ("Quadrature Amplitude Modulation") or a 64-QAM modulation schemes, well-known by the man skilled in the art. Two schematic constellation diagrams are illustrated in Fig. 5 and Fig. 6.

According to the mapping, the third interleaved data stream ID3 is coded on 4 bits, called modulation symbol, and is formed of 2 bits of the first interleaved data stream ID1 which is representative of the first data stream HP (the Most Significant Bits "MSB" of symbol designated a quadrant Q of a modulation constellation), and 2 bits of the second interleaved data stream ID2, which is representative of the second data stream LP (the Less Significant Bits "LSB" of symbol designated a position within a quadrant Q of the modulation constellation). Therefore, the location within a quadrant Q and the number of quadrants Q are regarded as special information in hierarchical mapping.

According to a hierarchical mapping, a modulation parameter a is defined. This modulation parameter α is representative of the ratio between Euclidian distances between the different positions in adjoining quadrants Q and the different positions within a quadrant Q. The value of a modulation parameter α represents the ratio between:
- the minimal Euclidian distance e2 between different neighboring positions in adjoining quadrants Q; and
- the minimal Euclidian distance e1 between different neighboring positions within a quadrant Q.

As illustrated in Fig. 5, a first modulation parameter α1 (e1 = e2) is defined for the hierarchical mapping.

As illustrated in Fig. 6, a second modulation parameter α2 (2*e1 = e2) is defined for the hierarchical mapping. This second parameter α2 is greater than the first parameter α1. It means that the Euclidian distance e1 between different neighboring positions within a quadrant Q is smaller when the first parameter α1 is defined.

In a not limited example, the first modulation parameter α1 is equal to 1, and the second modulation parameter α2 is equal to 2. In this later case, the neighboring positions NP1 which are located in adjoining quadrants Q have twice the Euclidian distance of those neighboring positions NP2 located within a same quadrant Q. Thus, the first neighboring positions NP1 will be more easily differentiated in the course of decoding when reception is impaired by noise, whereas the second neighboring positions NP2 within a quadrant Q are less easily differentiated in the course of decoding, with the same noise.

Hence, when the modulation parameter α is changed to a greater value, it permits to improve the robustness of the first data stream HP (the Euclidian distance e2 will be greater) at the expense of the robustness of the second data stream LP (the Euclidian distance e1 will be smaller), i.e. error on the first data stream HP will be smaller, whereas error on the second data stream LP will be greater.

But because of the mixing step, the robustness of the second data stream LP will be better than without the mixing step as will be explained hereinafter.

**In a sixth step 6)**, one transmits said modulated data stream MOD over a channel CH.

As illustrated in Fig. 3, the channel comprises two steps, as usually performed, of:
- adding a channel sample Hk for a group of bits (called symbol) of each data stream handled ; and
- adding a corresponding channel noise Zk (called noise sample).

Once the modulated data stream MOD has been transmitted over the channel CH, the modulated data stream MOD is managed by the receiving method as following.

The receiving method comprises the following steps as illustrated in Fig. 2:
- Receiving said modulated data stream MOD over a channel CH (step RX_MOD);
- Generating a demapped data stream DD on the basis of demapping said modulated data stream MOD (step DEMAP_MOD);
- Generating a first and a second deinterleaved data streams DID1, DID2 on the basis of deinterleaving said demapped data stream DD (step DEINTLV(DD)) ;
- Decoding said first deinterleaved data stream DID1 (step DECOD_DID1);
- Generating an a priori information API1 on the basis of mixing a part of the first decoded deinterleaved data stream DID1d with a mixing vector Mvec (step GEN_API1 (DID1d, Mvec)), and
- Decoding said second deinterleaved data stream DID2 using said a priori information API (step DECOD_DID2(API)).

In a not limited embodiment, the receiving method comprises a further step of generating a second a priori information API2 on the basis of mixing a part of said second deinterleaved data stream DID2 with a part of said first deinterleaved data stream DID1 (step GEN_API2(DID1, DID2).

In a not limited embodiment, the receiving method comprises a further step of iterating the deinterleaving step, the demapping step, and the decoding steps, the iterative demapping step using an a priori information API3 resulting from the first decoded deinterleaved data stream DID1d.

In a not limited embodiment, the receiving method comprises the further step of computing hard decision about the bits of the first data stream HP and of the second data stream LP from a posteriori probability vectors APP(bhp) and APP(b̃lp) of the first decoded deinterleaved data stream DID1d and of the second decoded deinterleaved data stream DID2d respectively (step ESTIM(DID1d, DID2d)).

For the following description, in the not limited embodiment of the receiving method described below, the receiving method comprises these further steps.

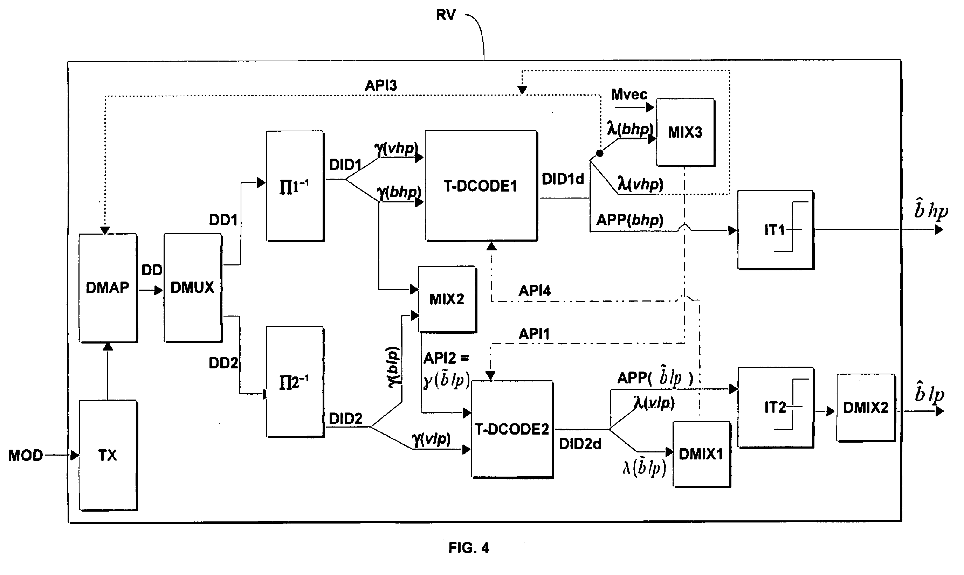

The steps of the receiving method are described in detail below. Reference to Fig. 2 and Fig. 4 will be made.

As will be described below, the receiver which carries out the receiving method combines two blocks that exchange soft information with each other. The first block, referred as a soft demapper, produces soft information in the form of "extrinsic probabilities" from the input modulated data stream and send it to the second block which is composed of turbo decoders. The second block produces also a soft information in the form of "extrinsic probabilities" and sends it back to the first block.

Hence, each block can take advantage of the extrinsic probabilities provided by the other block as an a priori information.

**In a first step 1**), one receives said modulated data stream MOD over a channel CH.

**In a second step 2**), one generates a demapped data stream DD on the basis of hierarchical demapping said modulated data stream MOD.

This step is the inverse step of the mapping above described in the transmitting method. As it is well-known by the man skilled in the art, it won't be described here.

In a not limited embodiment, the receiving method comprises a further step of demultiplexing the demapped data stream DD into two demapped data streams DD1, and DD2, as illustrated in Fig. 4, in order to extract the original data streams which have been transmitted, here the first interleaved data stream ID1 and the second interleaved data stream ID2 and to redirect the right bits into a first and a second deinterleavers respectively.

**In a third step 3**), one generates a first and a second deinterleaved data streams DID1, DID2 on the basis of deinterleaving said demapped data stream DD.

This step is the inverse step of the interleaving described before in the transmitting method. As it is well-known by the man skilled in the art, it won't be described here.

In a not limited embodiment, the demapping is hierarchical.

As illustrated in Fig. 4, the first deinterleaved data stream DID1 is composed of two first demapped extrinsic vectors γ(bhp) and γ(vhp) and the second deinterleaved data stream DID2 is composed of two second demapped extrinsic vectors γ(blp) and γ(vlp).

**In a fourth step 4**), one decodes said first deinterleaved data stream DID1 (first decoding).

This step is the inverse step of the turbo-encoding described before in the transmitting method. As it is well-known by the man skilled in the art, it won't be described here.

The output of said decoding is a first decoded deinterleaved data stream DID1d which is composed of:
- first decoded extrinsic vectors λ(bhp) and λ(vhp) which are computed by means of the two first demapped extrinsic vectors γ(bhp) and γ(vhp) computed in the preceding step ; and
- an a posteriori probability information APP(bhp).

It is to be noted that these two first decoded extrinsic vectors λ(bhp) and λ(blp) correspond respectively to the systematic part S1 and the parity part P1 of the first coded data stream HPc described before.

**In a fifth step 5**), one generates a first a priori information API1 on the basis of mixing a part of the first decoded deinterleaved data stream DID1d with a mixing vector Mvec.

Due to the introduced mixing procedure at the transmitting side, the systematic part S1=bhp of the first data stream HP is a redundant information in the sense that it is also present in the mixed coded data stream MDc as described before.

Hence, at the receiving side, the demapped extrinsic vector γ(bhp) (and therefore the extrinsic decoded vector λ(bhp)), based on the systematic part bhp, may be exploited as an additional a priori information API for improving the decoding performance of the second deinterleaved data stream ID2. Indeed, because of the hierarchical modulation, the first data stream HP is more reliable than the second data stream LP as described before and hence the demapped extrinsic vector γ(bhp) is a reliable information.

Hence, in a first not limited embodiment, one constructs a first soft pilot vector API1 based on the mixing of the extrinsic decoded vector λ(bhp) (corresponding to the systematic part S1 of the first coded data stream HPc) and a mixing vector Mvec [0,5; ... ;0,5] of length Lmvec, said soft pilot vector being used as an a priori information. It is to be noted that the length of the mixing vector Mvec (with probabilities values of 0,5) is equal to the length of the second data stream LP.

Such a mixing vector Mvec translates the fact that at the decoding side of the second deinterleaved data, one does not dispose of any a priori information on the decoded second data stream LP.

In a second not limited embodiment, one may construct a soft pilot vector API1' (not illustrated) based on the mixing of a part of the coded data stream HPc and the mixing vector Mvec, when only a part of the first data stream HP is used within the mixing step on the transmitting side.

Compared to the embodiment where the whole first data stream HP is used within the mixing step at the transmitting side, it permits at the receiving side to perform faster decoding, as for a given code rate Rlp, the number of input bits being decoded is decreased (compared to the use of the whole first data stream HP) whereas the output decoded bits remained the same.

**In a sixth step 6**), one generates a second a priori information API2 on the basis of mixing a part of said second deinterleaved data stream DID2 with a part of the first deinterleaved data stream DID1.

It permits to improve also the LP data stream BER performance with less iterations (iterations which will be explained below) as this a priori information API2 comprises bits of the first data stream HP.

Hence, in a not limited embodiment, one constructs a second soft pilot vector API2 based on the mixing of the extrinsic vector γ(bhp) of the first deinterleaved data stream DID1 and an extrinsic vector γ(blp) of the second deinterleaved data stream DID2, both provided by the demapper block.

This other a priori information API2 which is provided by the demapper, is used also as an input to the second turbo-decoder T-DCODE2.

**In a seventh step 7**), one decodes said second deinterleaved data stream DID2 using said a priori information API1, API2 (second decoding).

As illustrated on Fig. 4, there is a first feedback loop from the mixing side to the coding side for the first soft pilot vector API1.

It is to be noted that all the a priori information used API1, API2 are added as inputs to the decoding and for a given code rate Rlp, the number of input bits of a data stream being decoded is thus increased (compared to a method where no a priori information is used) whereas the output decoded bits remained the same.

Thanks to the a priori information API, here the first soft pilot vector API1 and the second soft pilot vector API2, one permits to have a reliable estimation of the "unknown" bits which are within the linear combination of the deinterleaved data stream DID2. Indeed, two inputs of the linear combinations of the deinterleaved data stream DID2 is the first soft pilot vector API1 and the second soft pilot vector API2, which are based on "known" bits, that is to say on bits received with an acceptable reliability. These are additional information which improves the decoding performance of the second data stream LP and thus its BER performance.

The output of said decoding is a second decoded deinterleaved data stream DID2d which is composed of:
- second decoded extrinsic vectors λ(b̃lp) and λ(vlp); and
- an a posteriori probability of the systematic part of said data stream DID2d called a posteriori probability information APP(b̃lp).

Finally, one iterates the deinterleaving step, the demapping step, and the decoding step.

The overall iteration is performed as following.

Inside an iteration between demapping and decoding, one performs several turbo decoding iteration. Hence, the decoding process is repeated for a number of N iterations, by alternating between the first and second decoding, and after these N iterations, the extrinsic vectors at the output of the decoding block are fed back to the demapping block as described before during M iterations.

It is to be noted that in not limited embodiments, the iterations N and M are performed until:
- the computation of the probabilities associated to the "unknown" bits converged to a stable probability value ; or
- until a certain BER is reached.

In a not limited embodiment, the iterative step of demapping uses a third a priori information API3 resulting from the first decoded deinterleaved data stream (ID1d). More particularly, the third a priori information API3 is composed of the first decoded extrinsic vectors λ(bhp) and λ(vhp) computed in step 4), which are fed back to the demapping side. As illustrated on Fig. 4, there is a second feedback loop from the mixing side to the demapping side for the third a priori information API3. In the same manner than the first a priori information API1, it permits to improve the BER performance of the second data stream LP.

It is to be noted that, in a not limited embodiment, the first decoding (step 4) is first performed before the second decoding (step 6) because the first data stream HP is to be received by all the receivers (the ones with good reception and the ones with degraded reception), when the first data stream HP is a high-priority data stream, and the second data stream LP is a low-priority data stream.

**In a eighth step 8**), after these N and M iterations, one computes hard decision of the bits (bhp and blp respectively) of the first data stream HP and of the second data stream LP from the a posteriori probability vectors APP(bhp) and APP(b̃lp) of the first decoded deinterleaved data stream DID1d and from the second decoded deinterleaved data stream DID2d respectively.

It is to be noted that a priori information API are used to compute the probabilities of a value regarding the "unknown" bits and the a posteriori probability vectors APP to take a further hard decision based on the probabilities computed. A probability will get a value between 0 and 1, whereas a hard decision will get a value of 0 or 1.

It is to be noted that the a priori information API is also an a posteriori information but is related to coded bits, whereas the a posteriori probability vector is related to an uncoded information (called information bits or systematic part).

The output of the hard decision computation are some estimated bits bhp and bl̃p respectively of the first data stream HP transmitted and of the second data stream LP transmitted, which will be used, for example to display a video.

In a not limited embodiment, the receiving method comprises a further step of demixing the hard decisions computed from the second decoded deinterleaved data stream DID2d. It permits to extract the hard decisions related to the second data stream transmitted LP only. Indeed, the hard decision taken from the second decoded deinterleaved data steam DID2d comprise the hard decisions of the second data stream LP and from a part or the whole first data stream HP (because of the mixing step at the transmission side).

Hence, the transmitting method and receiving method permit to improve the BER performance of the second data stream LP and thus to improve the reception of said second data stream LP.

The transmitting method and the receiving method described are carried out by a transmitting apparatus TR and a receiving apparatus RV respectively, as illustrated on Fig. 3 and Fig. 4 respectively.

The transmitting apparatus TR of a modulated data stream for use in a radio communication system, comprises in particular:
- A mixer MIX1 for generating a mixed data stream MD on the basis of mixing at least one part of a first data stream HP with a second data stream LP ;
- A first turbo-coder T-COD1 for encoding said first data stream HP
- A second turbo-coder T-COD2 for encoding said mixed data stream MD ;
- Two interleavers π1, π2 for generating two interleaved data streams ID based on the first coded data stream HPc and on the mixed coded data stream MDc;
- A mapper MAP for generating a modulated data stream MD on the basis of mapping said interleaved data streams ID1, ID2; and
- A transmitter TX for transmitting said modulated data stream MD over a channel CH.

In a not limited embodiment, the mixer MIX1 is pseudo-random bitwise interleaver. Of course, other types of interleavers may be used.

Hence, the receiving apparatus RV of a modulated data stream for use in a radio communication system, comprises in particular:
- A receiver RX for receiving said modulated data stream MOD over a channel CH ;
- A demapper DMAP for generating a demapped data stream DD on the basis of demapping said modulated data stream MOD ;
- Two deinterleavers π1⁻¹, π2⁻¹ for generating a first and a second deinterleaved data streams ID1, ID2 on the basis of deinterleaving said demapped data stream DD ;
- A first turbo-decoder T-DCOD1 for decoding said first deinterleaved data stream DID1;
- A mixer MIX3 for generating an a priori information API1 on the basis of mixing a part of the first decoded deinterleaved data stream DID1d with a mixing vector Mvec, and
- A second turbo-decoder T-DCOD2 for decoding said second deinterleaved data stream DID2 using said a priori information API1.

In a not limited embodiment, the receiving apparatus RV further comprises:
- A first decision module IT1 for computing hard decision about the bits (bhp) of the first data stream HP from the a posteriori probability vector APP(bhp); and
- A second decision module IT2 for computing hard decision about the bits (blp) of the second data stream LP from the a posteriori probability vector APP(b̃lp).

In a not limited embodiment, the receiving apparatus RV further comprises a second mixer MIX2 for generating a second a priori information API2 on the basis of mixing a part of said second deinterleaved data stream DID2 with a part of said first deinterleaved data stream DID1.

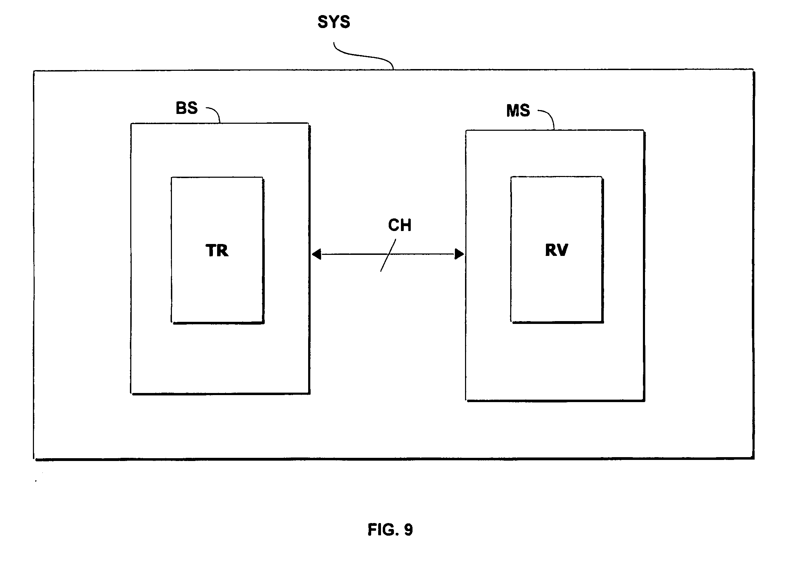

In a not limited embodiment, the transmitting apparatus TR is comprised within a base station BS and the receiving apparatus RV is comprised within a mobile station MS within a radio communication system SYS as illustrated in Fig. 9. The transmitting method and the receiving method permit to transmit scalable data streams, for example broadcast services such TV/video services, to different mobile stations, either of high quality reception via the high-priority data stream HP, either of high and low quality reception via the high-priority data stream HP and the low-priority data stream LP. It is to be noted that in a not limited embodiment, the receiver RX and the transmitter TX are radio front ends.

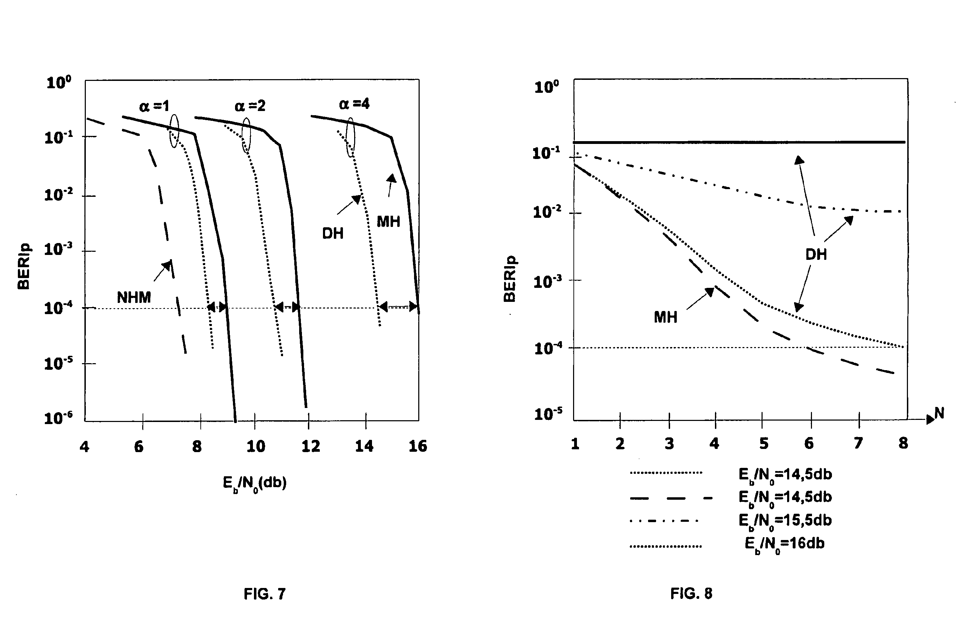

Fig. 7 and Fig. 8 show performance of the transmitting and receiving methods according to the invention using hierarchical modulation scheme and mixing the HP and LP data streams (called "mixed" method) compared to a method using hierarchical modulation without mixing the LP and HP data streams (called "disjoint" method), and to a method using non-hierarchical modulation scheme.

In particular, Fig. 7 and Fig. 8 show the performance by simulations, in term of Bit Error Rate of the second data stream LP (BERIp) versus signal to noise ratio Eb/No. Note that the computation of signal to noise ratio is well-known by the man skilled in the art. In other words, one computes a performance versus a parameter or cost. The performance (BERIp) shows if a bit has been well-decoded, and the cost shows how much power (energy/noise) has been used to send the bits. Then depending on the error one accepts to have and/or the power one wants to use, on selects the best solution.

Simulations characteristics are the followings.
- a) A first data stream HP has a length of Lhp = 1000 bits;
- b) A second data stream LP has a length of Llp = 2000 bits; It is to be noted that the choice of Llp = 2*Lhp is an agreement with practical assumptions where the data rate of the HP data stream is usually smaller than the data rate of the LP data stream, when the first data stream HP is a high-priority data stream, and the second data stream LP is a low-priority data stream;
- c) For LP and HP encoding, one considers a parallel turbo encoder with a common recursive systematic convolutional (RSC) constituent code with rate 1/3 and constraint length 4 (memory registers), defined in octal form.
- d) In the "mixed" method, the HP code rate Rhp of the first turbo-coder T_COD1 is set to 1/5, and the LP code rate of the second turbo-coder T_COD2 is set to 1/2, whereas for the "disjoint" method, the HP code rate Rhp of the first turbo-coder T_COD1 is set to 1/5, and the LP code rate of the second turbo-coder T_COD2 is set to 2/5.
- e) The interleaving and the mixing sequences are pseudo-random and operate over their entire input stream length. The number of turbo decoding iterations N is set to 8.

These settings ensure a fair comparison of the two competitive methods since one will have : c) the equality between the length of the LP and HP data streams, d) the equality between the length of the HP and LP encoded data streams, and thus the same number of channel uses among the two methods.

For keeping the decoding complexity comparable to that of the "disjoint" method, the "mixed" decoder is implemented by performing only one pass of soft pilot information exchange between the HP and the LP turbo decoders.

Fig. 7 shows that for α=1 (the least robust mode for the HP stream), the improvement for the "mixed" receiver (illustrated in plain lines MH) in terms of required signal to noise ratio Eb/No in order to attain a given BER of 10⁻⁴ for the LP stream is about 0.6 dB, compared to a "disjoint" receiver (illustrated in dotted lines DH), while a non-hierarchical 16-QAM modulation would be even 1.6 dB better (illustrated NHM).

It is to be noted that the improvement becomes more significant when increasing the modulation parameter α. One observes that the signal to noise ratio Eb/No necessary to obtain a BER of 10⁻⁴ (see horizontal double arrow), is reduced by about 0.8 dB (for α=2) and 1.5 dB (for α=4), if the "mixed" receiver is used instead of a "disjoint" receiver. In other words, when the HP stream is more robust (better protected i.e., for large values of α), the LP decoder benefits more from the soft pilot vectors for improving the LP BER performance.

Finally, Fig. 8 illustrates the LP stream BER performance of the "disjoint" and "mixed" receivers versus the number of turbo decoder iterations, at fixed values of signal to noise ratio Eb/No. This permits to evaluate the number of decoding iterations necessary to achieve a certain BER. One notices that the "mixed" decoder (illustrated MH) requires 6 iterations in order to achieve a BER of 10⁻⁴ at Eb/No=14.5 dB, while the "disjoint" decoder (illustrated DH) attains this BER for almost 8 iterations at Eb/No=16 dB.

It is to be understood that the present invention is not limited to the aforementioned embodiments and variations and modifications may be made without departing from the scope of the invention. In the respect, the following remarks are made.

In the same way that has been described above, in a not limited embodiment, a fourth a priori information API4 may be generated on the basis of mixing a part of a the decoded second deinterleaved data stream DID2d with the mixing vector Mvec, and decoding of the first deinterleaved data stream DID1 may be performed using said a priori information API4, as illustrated in Fig. 4. Therefore, in this embodiment, the receiving apparatus RV comprises:
- A demixer DMIX1 for generating said a priori information API4 on the basis of a part of said decoded second deinterleaved data stream DID2d, and more particularly on the basis of the extrinsic decoded vector λ(b̃lp). It permits to extract the bits of the first data stream HP and to use them as a priori information API4; and
- The second turbo-decoder T-DCOD2 for decoding said first deinterleaved data stream DID1 using said a priori information API4.

Some video data have been taken into not limited examples for the first data stream HP and the second data stream LP, but other data such as in not limited embodiments, some text data, voice data, email data, etc, may be transmitted via these two different data streams.

In another not limited embodiment, a base station BS may comprise a receiving apparatus as above-described, whereas a mobile station MS may comprise a transmitting apparatus as above-described, for example in the case when a mobile station has to broadcast some data streams.

It is to be understood that the present invention is not limited to the aforementioned application. It can be used within any application using mapping and transmitting two different data streams (a first one HP which is more reliable than a second one LP). Hence, in the description, a hierarchical mapping has been taken into a not limited embodiment. The invention may applied in a not limited example, to any other mappings, such as non hierarchical mapping, which deal with a transmission of both data streams HP and LP from one transmitting apparatus to one receiving apparatus on different channels with different qualities. For example, the first data stream HP may be mapped with a QPSK modulation well-known by the man skilled in the art, and the second data stream LP with a QAM64 modulation well-known by the man skilled in the art, which is less robust. It can be used with SISO encoder/decoder or other type of encoder/decoder.

It is to be understood that the methods and the apparatus according to the invention are not limited to any implementation.

There are numerous ways of implementing functions of the transmitting and receiving methods according to the invention by means of items of hardware or software, or both, provided that a single item of hardware or software can be carries out several functions. It does not exclude that an assembly of items of hardware or software or both carry out a function. For example, the encoding step 2) of the first data stream may be combined with the encoding step 3) of the mixed data stream, thus forming a single function without modifying the transmitting method in accordance with the invention.

Hence, the invention comprises the following advantages:
- the decoding of the second data stream LP which is being aided by the first data stream HP is more efficient and accurate than a decoding process of said second data stream LP which is performed independently from the first data stream HP, as the first data stream HP is more reliably received ; in other words the artificial dependency introduced at the transmitter side, is well exploited at the receiver side in order to improve the performance of the less protected LP stream by using the reliable soft information of the HP stream. This has become possible due to the dependency created at the transmitter.
- thanks to the a priori or soft pilot information, which is a reliable estimation of a bit within a linear combination received by the receiver via the modulation data stream, the "unknown" bits of the linear combination will be better estimated (the probabilities associated will be more reliable) ;
- when the whole first data stream HP is used within the mixing step at the transmitting side, it permits at the receiving side to perform a better decoding of the second data stream LP (the BER performance is improved), but a slower decoding, as for a given code rate Rlp, the number of input bits being decoded is increased (compared to a method where no mixing data is performed) whereas the output decoded bits remained the same; and
- the improvement provided for the LP stream BER is achieved while the HP decoding performance is unchanged.

## Claims

1. A transmitting method for a modulated data stream (MOD) and for use in a radio communication system, the method comprising the steps of:
- mixing at least one part of a first data stream (HP) with a second data stream (LP) to generate a mixed data stream (MD) ;
- encoding said first data stream (HP) ;
- encoding said mixed data stream (MD) ;
- generating two interleaved data streams (ID1, ID2) based on the first coded data stream (HPc) and on the mixed coded data stream (MDc) ;
- mapping said interleaved data streams (ID1, ID2) to generate a modulated data stream (MOD) ; and
- transmitting said modulated data stream (MOD) over a channel (CH).

2. A transmitting method according to claim 1, wherein the whole first data stream (HP) is used in the mixing step.

3. A transmitting method according to claim 1 or claim 2, wherein the mapping is hierarchical.

4. A transmitting method according to any one of the previous claims 1 to 3, wherein the mixed coded data stream (MDc) is composed of a systematic part (S2), said systematic part (S2) comprising a first data stream systematic part (S1), and wherein the step of interleaving data streams comprises a sub-step of removing the systematic part (S2) from the mixed coded data stream (MDc).

5. A transmitting method according to any one of the previous claims 1 to 4, wherein the first data stream (HP) is a high-priority data stream, and the second data stream (LP) is a low-priority data stream.

6. A receiving method for a modulated data stream (MOD) and for use in a radio communication system, the method comprising the steps of:
- receiving said modulated data stream (MOD) over a channel (CH);
- demapping said modulated data stream (MOD) to generate a demapped data stream (DD) ;
- generating a first and a second deinterleaved data streams (DID1, DID2) on the basis of deinterleaving said demapped data stream (DD);
- decoding said first deinterleaved data stream (DID1);
- mixing a part of the first decoded deinterleaved data stream (DID1d) with a mixing vector (Mvec) to generate an a priori information (API1); and
- decoding said second deinterleaved data stream (DID2) using said a priori information (API1).

7. A receiving method according to claim 6, further comprising a step of mixing a part of said second deinterleaved data stream (DID2) with a part of said first deinterleaved data stream (DID1) to generate an a priori information (API2).

8. A receiving method according to claim 6 or 7, wherein the demapping is hierarchical.

9. A receiving method according to any one of the previous claims 6 to 8, further comprising a step of iterating the deinterleaving step, the demapping step, and the decoding steps, the iterative demapping step using an a priori information (API3) resulting from the first decoded deinterleaved data stream (DID1d).

10. A receiving method according to any one of the previous claims 6 to 9, wherein the first data stream (HP) is a high-priority data stream, and the second data stream (LP) is a low-priority data stream.

11. A transmitting apparatus (TR) for a modulated data stream (MOD) and comprising.
- a mixer (MIX1) for mixing at least one part of a first data stream (HP) with a second data stream (LP) to generate a mixed data stream (MD) ;
- a first turbo-coder (T-COD1) for encoding said first data stream (HP) ;
- a second turbo-coder (T-COD2) for encoding said mixed data stream (MD) ;
- two interleavers (π) for generating two interleaved data streams (ID) based on the first coded data stream (HPc) and on the mixed coded data stream (MDc);
- a mapper (MAP) for mapping said interleaved data streams (ID1, ID2) to generate a modulated data stream (MD) ; and
- a transmitter (TX) for transmitting said modulated data stream (MD) over a channel (CH).

12. A receiving apparatus (RV) for a modulated data stream (MOD) and for use in a radio communication system and comprising:
- a receiver (RX) for receiving said modulated data stream (MOD) over a channel (CH) ;
- a demapper (DMAP) for demapping said modulated data stream (MOD) to generate a demapped data stream (DD) ;
- two deinterleavers (π⁻¹) for generating a first and a second deinterleaved data streams (ID1, ID2) on the basis of deinterleaving said demapped data stream (DD);
- a first turbo-decoder (T-DCOD1) for decoding said first deinterleaved data stream (ID1);
- a mixer (MIX3) for mixing a part of the first decoded deinterleaved data stream (DID1d) with a mixing vector (Mvec) to generate an a priori information (API1); and
- a second turbo-decoder (T-DCOD2) for decoding said second deinterleaved data stream (ID2) using said a priori information (API1).

13. A mobile station (MS) comprising a transmitting apparatus (TR) as claimed in claim 11.

14. A mobile station (MS) comprising a receiving apparatus (RV) as claimed in claim 12.

15. A base station (BS), comprising a transmitting apparatus (TR) as claimed in claim 11.

16. A base station (BS) comprising a receiving apparatus (RV) as claimed in claim 12.

17. A radio, communication system (SYS) comprising a transmitting apparatus (TR) as claimed in claim 11 and a receiving apparatus (RV) as claimed in claim 12.

## Patentansprüche

1. Ein Übertragungsverfahren für einen modulierten Datenstrom (MOD) und für den Einsatz in einem Funkkommunikationssystem, wobei das Verfahren die folgenden Schritte umfasst:
- Mischen mindestens eines Teils eines ersten Datenstroms (HP) mit einem zweiten Datenstrom (LP), um einen gemischten Datenstrom (MD) zu erzeugen;
- Codieren des besagten ersten Datenstroms (HP);
- Codieren des besagten gemischten Datenstroms (MD);
- Erzeugen von zwei verschachtelten Datenströmen (ID1, ID2) auf der Basis des ersten codierten Datenstroms (HPc) und des gemischten codierten Datenstroms (MDc);
- Abbilden der besagten verschachtelten Datenströme (ID1, ID2), um einen modulierten Datenstrom (MOD) zu erzeugen; und
- Übertragen des besagten modulierten Datenstroms (MOD) über einen Kanal (CH).

2. Ein Übertragungsverfahren nach Anspruch 1, wobei im Mischungsschritt der gesamte erste Datenstrom (HP) verwendet wird.

3. Ein Übertragungsverfahren nach Anspruch 1 oder Anspruch 2, wobei das Abbilden hierarchisch ist.

4. Ein Übertragungsverfahren nach einem beliebigen der vorstehenden Ansprüche 1 bis 3, wobei der gemischte codierte Datenstrom (MDc) aus einem systematischen Teil (S2) besteht, wobei der systematische Teil (S2) einen systematischen Teil (S1) des ersten Datenstroms umfasst, und wobei der Schritt des Verschachtelns der Datenströme einen Teilschritt des Entfernens des systematischen Teils (S2) aus dem gemischten codierten Datenstrom (MDc) umfasst.

5. Ein Übertragungssystem nach einem beliebigen der vorstehenden Ansprüche 1 bis 4, wobei der erste Datenstrom (HP) ein Datenstrom hoher Priorität ist, und der zweite Datenstrom (LP) ein Datenstrom niedriger Priorität ist.

6. Ein Empfangsverfahren für einen modulierten Datenstrom (MOD) und für den Einsatz in einem Funkkommunikationssystem, wobei das Verfahren die folgenden Schritte umfasst:
- Empfangen des besagten modulierten Datenstroms (MOD) über einen Kanal (CH);
- Rückbilden des besagten modulierten Datenstroms (MOD), um einen rückgebildeten Datenstrom (DD) zu erzeugen;
- Erzeugen eines ersten und eines zweiten entschachtelten Datenstroms (DID1, DID2) auf der Basis des Entschachtelns des besagten rückgebildeten Datenstroms (DD);
- Decodieren des besagten ersten entschachtelten Datenstroms (DID1);
- Mischen eines Teils des ersten decodierten entschachtelten Datenstroms (DID1d) mit einem Mischungsvektor (Mvec), um eine a-priori-Information (API1) zu erzeugen; und
- Decodieren des besagten zweiten entschachtelten Datenstroms (DID2) unter Verwendung der besagten a-priori-Information (API1).

7. Ein Empfangsverfahren nach Anspruch 6, weiterhin umfassend einen Schritt des Mischens eines Teils des besagten zweiten entschachtelten Datenstroms (DID2) mit einem Teil des besagten ersten entschachtelten Datenstroms (DID1), um eine a-priori-Information (API2) zu erzeugen.

8. Ein Empfangsverfahren nach Anspruch 6 oder 7, wobei das Rückbilden hierarchisch ist.

9. Ein Empfangsverfahren nach einem beliebigen der vorstehenden Ansprüche 6 bis 8, weiterhin umfassend einen Schritt des Wiederholens des Entschachtelungsschritts, des Rückbildungsschritts und der Decodierungsschritte, wobei der iterative Rückbildungsschritt eine aus dem ersten decodierten entschachtelten Datenstrom (DID1d) resultierende a-priori-Information (API3) verwendet.

10. Ein Empfangsverfahren nach einem beliebigen der vorstehenden Ansprüche 6 bis 9, wobei der erste Datenstrom (HP) ein Datenstrom hoher Priorität ist, und der zweite Datenstrom (LP) ein Datenstrom niedriger Priorität ist.

11. Eine Übertragungsvorrichtung (TR) für einen modulierten Datenstrom (MOD) und welche umfasst:
- Einen Mischer (MIX1) zum Mischen mindestens eines Teils eines ersten Datenstroms (HP) mit einem zweiten Datenstrom (LP), um einen gemischten Datenstrom (MD) zu erzeugen;
- einen ersten Turbo-Codierer (T-COD1) zum Codieren des besagten ersten Datenstroms (HP);
- einen zweiten Turbo-Codierer (T-COD2) zum Codieren des besagten gemischten Datenstroms (MD);
- zwei Verschachtelungsvorrichtungen (π) zum Erzeugen von verschachtelten Datenströmen (ID) basierend auf dem ersten codierten Datenstrom (HPc) und auf dem gemischten codierten Datenstrom (MDc);
- eine Abbildungsvorrichtung (MAP) zum Abbilden der besagten verschachtelten Datenströme (ID1, ID2), um einen modulierten Datenstrom (MD) zu erzeugen; und
- einen Sender (TX) zum Übertragen des besagten modulierten Datenstroms (MD) über einen Kanal (CH).

12. Eine Empfangsvorrichtung (RV) für einen modulierten Datenstrom (MOD) und für den Einsatz in einem Funkkommunikationssystem, und umfassend:
- Einen Empfänger (RX) zum Empfangen des besagten modulierten Datenstroms (MOD) über einen Kanal (CH);
- eine Rückbildungsvorrichtung (DMAP) zum Rückbilden des besagten modulierten Datenstroms (MOD), um einen rückgebildeten Datenstrom (DD) zu erzeugen;
- zwei Entschachtelungsvorrichtungen (π⁻¹) zum Erzeugen eines ersten und eines zweiten entschachtelten Datenstroms (ID1, ID2) auf der Basis des Entschachtelns des besagten rückgebildeten Datenstroms (DD);
- einen ersten Turbo-Decodierer (T-DCOD1) zum Decodieren des besagten ersten entschachtelten Datenstroms (ID1);
- einen Mischer (MIX3) zum Mischen eines Teils des ersten decodierten entschachtelten Datenstroms (DID1d) mit einem Mischungsvektor (Mvec), um eine a-priori-Information (API1) zu erzeugen; und
- einen zweiten Turbo-Decodierer (T-DCOD2) zum Decodieren des besagten zweiten entschachtelten Datenstroms (ID2) unter Verwendung der besagten a-priori-Information (API1).

13. Eine Mobilstation (MS), umfassend eine Übertragungsvorrichtung (TR) gemäß Anspruch 11.

14. Eine Mobilstation (MS), umfassend eine Empfangsvorrichtung (RV) gemäß Anspruch 12.

15. Eine Basisstation (BS), umfassend eine Übertragungsvorrichtung (TR) gemäß Anspruch 11.

16. Eine Basisstation (BS), umfassend eine Empfangsvorrichtung (RV) gemäß Anspruch 12.

17. Ein Funkkommunikationssystem (SYS), umfassend eine Übertragungsvorrichtung (TR) gemäß Anspruch 11, und eine Empfangsvorrichtung (RV) gemäß Anspruch 12.

## Revendications

1. Procédé de transmission pour un flux de données modulé (MOD) et pour une utilisation dans un système de radiocommunication, le procédé comprenant les étapes suivantes :
- mélanger au moins une partie d'un premier flux de données (HP) à un deuxième flux de données (LP) pour générer un flux de données mixte (MD) ;
- coder ledit premier flux de données (HP) ;
- coder ledit flux de données mixte (MD) ;
- générer deux flux de données entrelacés (ID1, ID2) sur la base du premier flux de données codé (HPc) et du flux de données codé mixte (MDc) ;
- mapper lesdits flux de données entrelacés (ID1, ID2) pour générer un flux de données modulé (MOD) ; et
- transmettre ledit flux de données modulé (MOD) par l'intermédiaire d'un canal (CH).

2. Procédé de transmission selon la revendication 1, dans lequel le premier flux de données (HP) entier est utilisé dans l'étape de mélange.

3. Procédé de transmission selon la revendication 1 ou la revendication 2, dans lequel le mappage est hiérarchique.

4. Procédé de transmission selon l'une quelconque des revendications précédentes 1 à 3, dans lequel le flux de données codé mixte (MDc) est composé d'une partie systématique (S2), ladite partie systématique (S2) comprenant une partie systématique (S1) de premier flux de données, et dans lequel l'étape d'entrelacement de flux de données comprend une sous-étape de retrait de la partie systématique (S2) du flux de données codé mixte (MDc).

5. Procédé de transmission selon l'une quelconque des revendications précédentes 1 à 4, dans lequel le premier flux de données (HP) est un flux de données de haute priorité, et le deuxième flux de données (LP) est un flux de données de basse priorité.

6. Procédé de réception pour un flux de données modulé (MOD) et pour une utilisation dans un système de radiocommunication, le procédé comprenant les étapes suivantes :
- recevoir ledit flux de données modulé (MOD) par l'intermédiaire d'un canal (CH).
- démapper ledit flux de données modulé (MOD) pour générer un flux de données démappé (DD) ;
- générer un premier et un deuxième flux de données désentrelacés (DID1, DID2) sur la base du désentrelacement dudit flux de données démappé (DD) ;
- décoder ledit premier flux de données désentrelacé (DID1 ) ;
- mélanger une partie du premier flux de données désentrelacé décodé (DID1d) à un vecteur de mélange (Mvec) pour générer une information à priori (API1) ; et
- décoder ledit deuxième flux de données désentrelacé (DID2) en utilisant ladite information à priori (API1).

7. Procédé de réception selon la revendication 6, comprenant en outre une étape de mélange d'une partie dudit deuxième flux de données désentrelacé (DID2) à une partie dudit premier flux de données désentrelacé (DID1) pour générer une information à priori (API2).

8. Procédé de réception selon la revendication 6 ou 7, dans lequel le démappage est hiérarchique.

9. Procédé de réception selon l'une quelconque des revendications précédentes 6 à 8, comprenant en outre une étape d'itération de l'étape de désentrelacement, de l'étape de démappage, et des étapes de décodage, l'étape de démappage itérative utilisant une information à priori (API3) résultant du premier flux de données désentrelacé décodé (DID1d).

10. Procédé de réception selon l'une quelconque des revendications précédentes 6 à 9, dans lequel le premier flux de données (HP) est un flux de données de haute priorité, et le deuxième flux de données (LP) est un flux de données de basse priorité.

11. Appareil de transmission (TR) pour un flux de données modulé (MOD) et comprenant :
- un mélangeur (MIX1) pour mélanger au moins une partie d'un premier flux de données (HP) à un deuxième flux de données (LP) afin de générer un flux de données mixte (MD) ;
- un premier turbo-codeur (T-COD1) pour coder ledit premier flux de données (HP) ;
- un deuxième turbo-codeur (T-COD2) pour coder ledit flux de données mixte (MD) ;
- deux dispositifs d'entrelacement (Π) pour générer deux flux de données entrelacés (ID) sur la base du premier flux de données codé (HPc) et du flux de données codé mixte (MDc) ;
- un mappeur (MAP) pour mapper lesdits flux de données entrelacés (ID1, ID2) afin de générer un flux de données modulé (MD) ; et
- un émetteur (TX) pour transmettre ledit flux de données modulé (MD) par l'intermédiaire d'un canal (CH).

12. Appareil de réception (RV) pour un flux de données modulé (MOD) et pour une utilisation dans un système de radiocommunication et comprenant :
- un récepteur (RX) pour recevoir ledit flux de données modulé (MOD) par l'intermédiaire d'un canal (CH) ;
- un démappeur (DMAP) pour démapper ledit flux de données modulé (MOD) afin de générer un flux de données démappé (DD) ;
- deux dispositifs de désentrelacement (Π⁻¹) pour générer un premier et un deuxième flux de données désentrelacés (ID1, ID2) sur la base du désentrelacement dudit flux de données démappé (DD) ;
- un premier turbo-décodeur (T-DCOD1) pour décoder ledit premier flux de données désentrelacé (ID1) ;
- un mélangeur (MIX3) pour mélanger une partie du premier flux de données désentrelacé décodé (DID1d) à un vecteur de mélange (Mvec) afin de générer une information à priori (API1); et
- un deuxième turbo-décodeur (T-DCOD2) pour décoder ledit deuxième flux de données désentrelacé (ID2) en utilisant ladite information à priori (API1).

13. Station mobile (MS) comprenant un appareil de transmission (TR) selon la revendication 11.

14. Station mobile (MS) comprenant un appareil de réception (RV) selon la revendication 12.

15. Station de base (BS) comprenant un appareil de transmission (TR) selon la revendication 11.

16. Station de base (BS) comprenant un appareil de réception (RV) selon la revendication 12.

17. Système de radiocommunication (SYS) comprenant un appareil de transmission (TR) selon la revendication 11 et un appareil de réception (RV) selon la revendication 12.
